# EUROPEAN PATENT APPLICATION

(11) **EP 4 524 626 A1**
(43) Date of publication of application: **19.03.2025**
(21) Application number: 23197186.2
(22) Date of filing: 13.09.2023
(51) Int. Cl.: G02B 6/02, G02B 6/024

(54) **POLARIZATION MAINTAINING PHOTONIC CRYSTAL FIBRE**

(71) Applicant: NKT Photonics A/S, 3460 Birkerød (DK)
(72) Inventor: LYNGSØE, Jens Kristian, 3460 Birkerød (DK); MAACK, Martin Dybendal, 3460 Birkerød (DK)
(74) Representative: Zacco Denmark A/S

(57) **Abstract**

A polarization maintaining, PM, photonic crystal fibre, PCF, (100) comprising: a core region (102); an inner cladding region (104) comprising a plurality of microstructure elements (106) extending in a cladding background material (108) having a first coefficient of thermal expansion, the microstructure elements arranged in a first lattice having a first pitch; and an outer cladding region (110) comprising said cladding background material (112), a first stress applying region, SAR, (114, 214) and a second SAR (116, 216), the first SAR and the second SAR are each formed of a plurality of stress elements (118), of a material having a second coefficient of thermal expansion, which extend in said longitudinal direction and are arranged in a respective second lattice. The locations of the first SAR and the second SAR relative to the core region and the microstructure elements, the first coefficient of thermal expansion, and the second coefficient of thermal expansion are configured to cause a stress induced birefringence in the core region of the PM PCF.

## Description

### Technical Field

The invention relates to a polarization maintaining, PM, photonic crystal fibre, PCF. The invention further relates to a preform for fabricating the PM PCF and to a fibre assembly comprising the PM PCF.

### Background

Large mode area, LMA, polarization maintaining, PM, photonic crystal fibres, PCF, (also known as 'micro-structured fibres') can be designed to be endlessly single-mode (i.e. to have no higher order mode cut-off), deliver excellent mode quality at all wavelengths, and exhibit low loss while keeping an almost constant mode field diameter. This makes them ideal for multi-wavelength transmission and delivery of short optical pulses, and to be used as single-mode PM fibre pigtails. Each of these applications of LMA PM PCFs require, or benefit from, the LMA PM PCF being connectorized, i.e. having an optical fibre connector provided at one end. The LMA PM PCF can thus be turned into an optical fibre cable or patch cord that can be easily connected to an optical input and/or output of an optical device.

WO 2005/059612 describes a LMA PM PCF comprising stress rods provided within the PCF microstructure cladding region, which cause stress induced birefringence in the PCF core region.

### Summary

It is an object to provide an improved polarization maintaining photonic crystal fibre, PM PCF.

It is a further object to enable improved cross-sectional roundness of a PM PCF.

It is a further object to enable improved stress induced birefringence in the core region of a PM PCF.

It is a further object to enable an improved connectorized PM PCF.

An aspect provides a polarization maintaining, PM, photonic crystal fibre, PCF, comprising a core region for propagating light in a longitudinal direction of the PM PCF, an inner cladding region and an outer cladding region. The inner cladding region surrounds the core region. The inner cladding region comprises a plurality of microstructure elements extending in said longitudinal direction in a cladding background material having a first coefficient of thermal expansion. The microstructure elements are arranged in a first lattice having a first pitch between centres of neighbouring elements. The outer cladding region surrounds the inner cladding region. The outer cladding region comprises said cladding background material having said first coefficient of thermal expansion, a first stress applying region and a second stress applying region. The first stress applying region and the second stress applying region are each formed of a plurality of stress elements of a material having a second coefficient of thermal expansion different to the first coefficient of thermal expansion. The stress elements of each said stress applying region extend in said longitudinal direction and are arranged in a respective second lattice. The locations of the first stress applying region and the second stress applying region relative to the core region and the microstructure elements, the first coefficient of thermal expansion, and the second coefficient of thermal expansion are configured to cause a stress induced birefringence in the core region of the PM PCF.

The structure of the PM PCF may enable improved cross-sectional roundness of the PM PCF outer diameter, which may enable improved connectorization of the fibre, in particular when the PM PCF is fixated inside a fibre ferrule e.g., by gluing the fibre to the inner surface of the ferrule. The structure of the stress applying regions may enable improved positioning of the stress applying regions within the PM PCF, which may advantageously provide improved cross-sectional roundness of the PM PCF.

The presence of stress applying regions in the outer cladding region of a PM PCF may result in various distortions of the PM PCF outer surface causing the circumference to deviate from a perfect circle. In some cases, the fibre diameter in the axis of the stress applying regions can differ from the fibre diameter along an axis perpendicular thereto. This can make the cross-sectional shape of the outer surface of the fibre slightly elliptical. In some cases, the introduction of the stress applying regions causes a kink to form on the outer surface of the PM PCF. Such distortions of the outer surface of the fibre can cause problems when the fibre is glued inside a fibre ferrule, where a difference in glue thickness due to the distortion of the fibre circumference may introduce a stress field with counteracts the stress in the fibre core induced by the stress applying regions. In prior art fibres, the distortion of the outer fibre diameter is compensated by increasing the thickness of the outermost fibre region surrounding the outer cladding region to smoothen out the distortion.

One measure of the reduced roundness of the PM PCF caused by the inclusion of the stress applying regions is provided by determining the non-circularity of the PM PCF's outer surface. The non-circularity describes the deviation of the PM PCF's cross-sectional shape from a perfect circle and is determined by dividing a difference between a maximum value, A, and a minimum value, B, of relative values for the fibre outer diameter, D, by a mean value of the relative values, i.e. 2·(A-B)/(A+B). The maximum and minimum values may be determined by direct measurement or from a fit of the PM PCF outer diameter for a plurality of circumferential directions, ϕ, to D(ϕ)=A+Bsin2ϕ.

In an embodiment, the non-circularity 2·(A-B)/(A+B) is below 0.02, such as below 0.01, such as below 0.0075, such as below 0.005.

The structure of the stress applying regions may enable improved positioning of the stress applying regions relative to the inner cladding region and/or the core region, which may advantageously provide improved stress induced birefringence in the core region of the PM PCF. An improved positioning of the stress applying regions may also provide that distortion of the fibre diameter by the stress applying regions is reduced thereby mitigating the associated problems without the need for adding a thick region of fibre material, e.g., a thick ring of cladding background material, surrounding the outer cladding. This provides that a strong stress-induced birefringence can be obtained in a substantially circular fibre without the need for increasing the fibre diameter significantly. For example, in some cases providing that the PM PCF has an outer diameter of 125 µm ensures compatibility with standard fibre optical components while still obtaining a strong birefringence.

The core region is preferably solid. In an embodiment, the core region comprises a silica material.

The structure of the stress applying regions may enable tilt of the stress applying regions relative to the inner cladding region to be reduced or avoided. Tilt is the angle between any symmetry axis of the inner cladding region and the nearest symmetry axis of the stress applying region.

The structure of the stress applying regions may enable improved shape of the stress applying regions, which may advantageously provide improved cross-sectional roundness of the PM PCF. The improved shape of the stress applying regions may also provide improved stress induced birefringence in the core region of the PM PCF.

In an embodiment, the first stress applying region and the second stress applying region are located in the cladding background material outside the inner cladding region.

In an embodiment, the first stress applying region and the second stress applying region are located adjacent the inner cladding region, i.e., adjacent to the arrangement of microstructural elements. This may advantageously cause maximum stress to be applied to the core region, resulting in maximum induced birefringence in the core region for a given diameter of the inner cladding region.

In an embodiment, the first lattice and the second lattice have the same lattice structure. This may advantageously enable improved shape and/or positioning of the stress applying regions within the outer cladding region, which may advantageously maximise the induced birefringence in the core region and provide improved cross-sectional roundness of the PM PCF.

In an embodiment, the first lattice and the second lattice are hexagonal lattices, i.e., where the microstructural elements and the plurality of stress elements arranged in hexagonal lattices.

In an embodiment, the stress elements of each said stress applying region are arranged in a respective second lattice with said first pitch between centres of neighbouring stress elements. Using the same pitch may provide the advantage of easier stacking of the preform from which the PM PCF is produced.

In an embodiment, the stress elements of each said stress applying region are arranged in a respective second lattice with a pitch between centres of neighbouring stress elements that is different to the first pitch.

In an embodiment, the microstructure elements in the inner cladding region forms a hexagonal arrangement such that the inner cladding region has a substantially hexagonal cross-sectional shape with a 6-fold symmetry.

In an embodiment, the sides of the inner cladding region facing the stress applying regions are straight or convex.

In an embodiment, a first side of the first stress applying region is located adjacent a first side of the inner cladding region and a first side of the second stress applying region is located adjacent a second side of the inner cladding region, opposite the first side of the inner cladding region. This may enable improved shape and/or position of the stress applying regions within the outer cladding region, which may advantageously provide increased birefringence in the fibre core region and improved cross-sectional roundness of the PM PCF. A PM PCF having this structure may advantageously be drawn without tilt of the stress applying regions occurring during the fibre draw.

In an embodiment, the first stress applying region and the second stress applying region respectively define a first recess and a second recess in cross-section. The first stress applying region is located adjacent the inner cladding region with a first corner of the inner cladding region nested in the first recess. The second stress applying region is located adjacent the inner cladding region with a second corner of the inner cladding region, opposite the first corner, nested in the second recess. This may enable improved shape and/or position of the stress applying regions within the outer cladding region, which may advantageously provide that the stress applying regions can provide the strongest effect and thereby increased birefringence in the fibre core region and improved cross-sectional roundness of the PM PCF even for relatively small outer diameters of the PM PCF. A PM PCF having this structure may advantageously be drawn without tilt of the stress applying regions occurring during the fibre draw.

In an embodiment, the first pitch is less than 9µm. This may advantageously enable the PM PCF to have a core diameter of up to 10µm and a standard outer diameter of 125µm or 230µm, while having strong birefringence in the core and improved cross-sectional roundness of the outer diameter.

In an embodiment, the first pitch is in the range 3µm to 7µm. This may advantageously enable the PM PCF to have a core diameter of up to 10µm and a standard outer diameter of 125µm or 230µm, while having strong birefringence in the core and improved cross-sectional roundness of the outer diameter of the PM PCF.

In an embodiment, the PM PCF has an outer diameter and the first pitch is less than 3% of the outer diameter. This may advantageously enable the PM PCF to have a core diameter of up to 10µm and a standard outer diameter of 125µm or 230µm, while having strong birefringence in the core and improved cross-sectional roundness of the outer diameter of the PM PCF.

In an embodiment, the outer diameter is 125µm and the first pitch is less than 4µm to within manufacturing tolerances.

In an embodiment, the outer diameter is 125µm and the first pitch is 3.3µm to within manufacturing tolerances. This may advantageously enable the PM PCF to have a core diameter in the region of 5µm and a standard outer diameter, while having strong birefringence in the core and improved cross-sectional roundness of the outer diameter of the PM PCF.

In an embodiment, the outer diameter is 230µm and the first pitch is less than 7µm to within manufacturing tolerances.

In an embodiment, the outer diameter is 230µm and the first pitch is 6.5µm to within manufacturing tolerances. This may advantageously enable the PM PCF to have a core diameter in the region of 10µm and a standard outer diameter, while having strong birefringence in the core and improved cross-sectional roundness of the outer diameter of the PM PCF.

In an embodiment, the cladding background material is Silica and the stress elements are formed of Boron-doped Silica, thereby taking advantage of industry standard, proven technology for manufacturing optical waveguides. Other materials may be used though, e.g. fluoride (e.g. fluorozirconate), tellurite, phosphate or chalcogenide based glasses or polymer materials, whereby the fibre may be optimised for particularly strong birefringence and/or specific wavelengths/wavelength ranges.

In an embodiment, the ratio between the shortest distance from the stress applying regions to the outer surface of the fibre and the diameter of the inner cladding region is between 0.5 and 1.5, such as between 0,75 and 1,25, such as between 0.9 and 1.1. This may advantageously enable the PM PCF to have a relatively large inner cladding region to provide strong confinement of light to the core region while ensuring an improved roundness even for a relatively small outer diameter of the PM PCF.

In an embodiment, the hexagonal arrangement in the inner cladding region comprises 4 layers of microstructure elements surrounding the core region, such as 5 layers of microstructure elements surrounding the core region.

The light guiding properties of the PM PCF generally improves with increasing number of layers of microstructure elements, while the stress induced birefringence decreases with increasing distance between the core region and the stress applying regions. For some values of the first pitch a strong guidance and a strong birefringence is obtained with 4 layers of microstructure elements.

The layers of microstructure elements may be substantially complete to improve the guiding properties of the core region.

In an embodiment, 4 or 5 layers of microstructure elements is arranged between the core region and the outer cladding region along an axis extending between the stress applying regions.

Corresponding embodiments and advantages apply to the preform and the fibre assembly described below.

An aspect provides a preform for fabricating a PM PCF as described above. The preform comprises stacked longitudinal preform elements comprising a preform core rod, a plurality of preform inner cladding capillary tubes of the cladding background material, a plurality of preform stress element rods of said material having said second coefficient of thermal expansion, a plurality of preform outer cladding rods of the cladding background material, and a preform stacking tube. The preform inner cladding capillary tubes are stacked in an inner cladding region around the preform core rod in a said first lattice having a second pitch between centres of neighbouring capillary tubes; the second pitch is greater than the first pitch. Within each of the first stress applying region and the second stress applying region the preform stress element rods are stacked in a respective said second lattice having said second pitch between centres of neighbouring stress element rods. The preform outer cladding rods are stacked in an outer cladding region around the inner cladding region, the first stress region and the second stress region. The preform core rod, the preform inner cladding capillary tubes, the preform stress element rods and the preform outer cladding rods are located within the preform stacking tube.

In an embodiment, the preform stress element rods are arranged outside the inner cladding region in a first stress applying region and in a second stress applying region.

An aspect provides a fibre assembly comprising an optical connector and a PM PCF. The optical connector comprises a connector housing and a connector sub-assembly including a ferrule. An end of the PM PCF is located and glued within the ferrule. The PM PCF comprises a core region for propagating light in a longitudinal direction of the PM PCF, an inner cladding region and an outer cladding region. The inner cladding region surrounds the core region. The inner cladding region comprises a plurality of microstructure elements extending in said longitudinal direction in a cladding background material having a first coefficient of thermal expansion. The microstructure elements are arranged in a first lattice having a first pitch between centres of neighbouring elements. The outer cladding region surrounds the inner cladding region. The outer cladding region comprises said cladding background material having said first coefficient of thermal expansion, a first stress applying region and a second stress applying region. The first stress applying region and the second stress applying region are each formed of a plurality of stress elements of a material having a second coefficient of thermal expansion different to the first coefficient of thermal expansion. The stress elements of each said stress applying region extend in said longitudinal direction and are arranged in a respective second lattice with said first pitch between centres of neighbouring stress elements. The locations of the first stress applying region and the second stress applying region relative to the core region and the microstructure elements, the first coefficient of thermal expansion, and the second coefficient of thermal expansion are configured to cause a stress induced birefringence in the core region of the PM PCF.

The structure of the PM PCF may enable improved cross-sectional roundness of the PM PCF outer diameter, which may enable improved connectorization of the fibre.

The structure of the stress applying regions may enable improved positioning of the stress applying regions within the PM PCF, which may advantageously provide improved cross-sectional roundness of the PM PCF. The structure of the stress applying regions may enable improved shape of the stress applying regions, which may advantageously provide improved cross-sectional roundness of the PM PCF.

Improved cross-sectional roundness of the PM PCF outer diameter may advantageously improve the distribution of the glue around the PM PCF outer diameter within the ferrule. This may advantageously mitigate reduction of the stress experienced within the core region of the PM PCF caused by uneven distribution of glue around the PM PCF outer diameter, and thus mitigate corresponding reduction in the stress induced birefringence in the core region of the PM PCF.

Embodiments of the invention will now be described, by way of example only, with reference to the accompanying drawings.

### Brief Description of the drawings

Figures 1 and 2 are schematic drawings of cross sections of embodiments of a PM PCF;
Figure 3 shows a photomicrograph of a cross section of an embodiment of a PM PCF;
Figure 4 is a schematic drawing of a cross section of an embodiment of a PM PCF;
Figures 5 and 6 are schematic drawings of cross sections of embodiments of a preform for fabricating a PM PCF; and
Figure 7 shows a perspective view of a part of an embodiment of a fibre assembly.

### Detailed description

The same reference numbers are used for corresponding features in different embodiments.

Optical fibres according to the present invention (termed photonic crystal fibres) have a longitudinal direction and a cross section perpendicular thereto. The cross section of a photonic crystal fibre may vary along its length, but is typically constant.

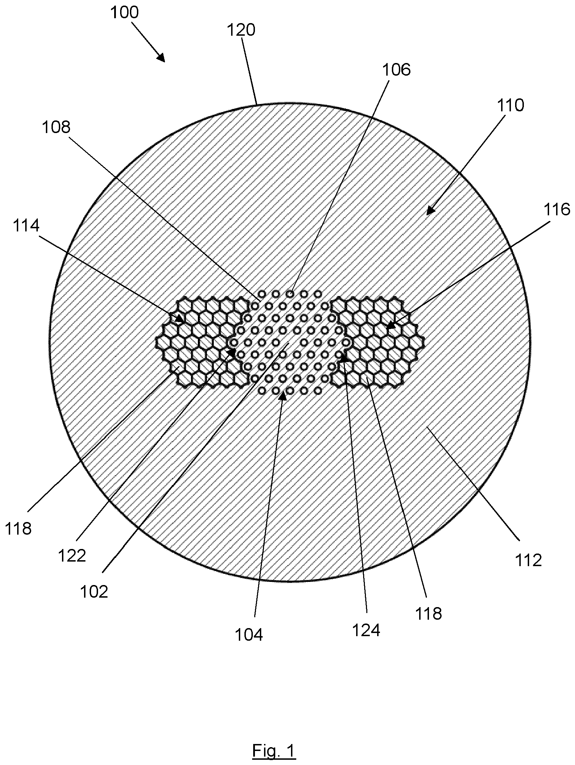

Referring to Figure 1, an embodiment provides a polarization maintaining, PM, photonic crystal fibre, PCF, 100 comprising a core region 102 for propagating light in a longitudinal direction of the PM PCF, an inner cladding region 104 surrounding the core region, and an outer cladding region 110 surrounding the inner cladding region.

The inner cladding region comprises a plurality of microstructure elements in the form of microstructural holes 106 provided in cladding background material 108. The microstructural holes extend in the longitudinal direction of the PM PCF and are arranged (as viewed in the cross-section of the PM PCF 100, as illustrated in Figure 1) in a first lattice. The first lattice is a substantially hexagonal lattice (i.e. the lengths of the edges of the unit cell of the lattice structure, and the angles between them, result in unit cells that are substantially hexagonal in shape) and has a first pitch between centres of neighbouring elements (i.e. between neighbouring unit cells). The cladding background material has a first coefficient of thermal expansion, and may, for example, be Silica. The core region may also be Silica.

The outer cladding region comprises cladding background material 112, a first stress applying region 114 and a second stress applying region 116. The cladding background material has the first coefficient of thermal expansion, i.e. it is the same material as the cladding background material of the inner cladding region. The cladding background material 112 may, for example, be Silica.

The first stress applying region and the second stress applying region are located in the cladding background material, outside the inner cladding region. In this embodiment, the first stress applying region and the second stress applying region are located adjacent the inner cladding region. The stress applying regions do not overlap the inner cladding region.

The inner cladding region 104 has a substantially hexagonal cross-sectional shape. The first stress applying region 114 defines a first recess 122 and the second stress applying region 116 defines a second recess 124, as viewed in cross-section (as illustrated in Figure 1). The first stress applying region is located adjacent the inner cladding region with a first corner of the inner cladding region nested in the first recess. The second stress applying region is located adjacent the inner cladding region with a second corner of the inner cladding region, opposite the first corner, nested in the second recess.

In an alternative embodiment, there may be a gap between each stress applying region and the inner cladding region, which may reduce the birefringence of the PM PCF 100.

The first stress applying region and the second stress applying region are each formed of a plurality of stress elements 118. The stress elements are formed of a material having a second coefficient of thermal expansion different to the first coefficient of thermal expansion. The stress elements may, for example, be formed of Boron-doped Silica.

The stress elements 118 of each stress applying region extend in the longitudinal direction of the PM PCF 100. Within each stress applying region, the stress elements are arranged in a respective second lattice. The second lattice is a substantially hexagonal lattice (i.e. the lattice structure is formed of lattice cells that are substantially hexagonal in shape) and has the same pitch as the first lattice, i.e. the second lattice has the same pitch between centres of neighbouring stress elements as is between the centres of neighbouring elements of the inner cladding region.

The locations of the first stress applying region and the second stress applying region relative to the core region and the microstructure elements, the first coefficient of thermal expansion, and the second coefficient of thermal expansion are configured to cause a stress induced birefringence in the core region 102 of the PM PCF 100.

Anisotropic deformation of the core region due to the stress applying regions or a resulting anisotropic strain field (or stress field) induced in the core region by the stress applying regions results - due to the elasto-optic effect - in the material of the core region becoming birefringent, whereby different polarization states experience different refractive indices, providing a means for separating the two polarization states of a given longitudinal mode, and optionally eliminating one of them. An 'anisotropic strain field' will be understood to mean a strain field that is different in size in two different directions of a cross section of the core region.

The combination of a micro-structured fibre (enabling single-mode operation over a large wavelength range) and the induction of an anisotropic strain field in the core region (providing birefringence) enable single mode operation of the waveguide with substantially constant birefringence over a large wavelength range.

In the present context, the `core region' is defined - when viewed in a cross section perpendicular to a longitudinal direction of the fibre - as a (typically central) light-propagating part of the fibre. The core region is limited in a radial direction by the microstructure elements of the inner cladding region.

By the `coefficient of thermal expansion' is generally meant the volume coefficient of thermal expansion.

The difference between the first coefficient of thermal expansion and the second coefficient of thermal expansion is sufficiently large to generate a total strain in the core region to result in a birefringence of at least 0.5 × 10⁻⁵, such as larger than 5 × 10⁻⁵, such as larger than 10⁻⁴. The degree of birefringence of an optical waveguide is defined by the difference between the effective mode indices in the two primary polarisation states.

Configuring the first coefficient of thermal expansion and the second coefficient of thermal expansion to cause a stress induced birefringence in the core region of the PM PCF can include configuring the relative magnitude of the coefficients of thermal expansion, depending on the materials used and their temperature dependencies.

In an embodiment, the relative difference between the first coefficient of thermal expansion and the second coefficient of thermal expansion numerically is larger than 1%, such as larger than 5%, such as larger than 10%. In an embodiment, the numerical value of the difference between the first coefficient of thermal expansion and the second coefficient of thermal expansion is larger than 0.1*10⁻⁶ K⁻¹, such as larger than 0.5*10⁻⁶ K⁻¹, such as larger than 1.0*10⁻⁶ K⁻¹.

In an embodiment, the first pitch is less than 9□m.

In an embodiment, the first pitch is in the range 3□m to 7Dm.

In an embodiment, the PM PCF 100 has an outer diameter and the first pitch is less than 3% of the outer diameter.

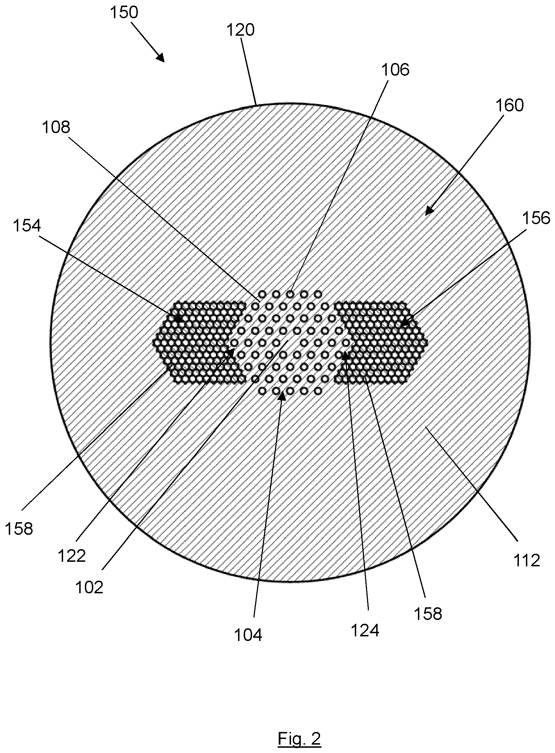

Referring to Figure 2, an embodiment provides a polarization maintaining, PM, photonic crystal fibre, PCF, 150 comprising a core region 102 for propagating light in a longitudinal direction of the PM PCF, an inner cladding region 104 surrounding the core region, and an outer cladding region 160 surrounding the inner cladding region.

The core region 102 and the inner cladding region 104 are as described above.

The outer cladding region comprises cladding background material 112, a first stress applying region 154 and a second stress applying region 156. The cladding background material has the first coefficient of thermal expansion, i.e. it is the same material as the cladding background material of the inner cladding region. The cladding background material 112 may, for example, be Silica.

The first stress applying region and the second stress applying region are located in the cladding background material, outside the inner cladding region. In this embodiment, the first stress applying region and the second stress applying region are located adjacent the inner cladding region. The stress applying regions do not overlap the inner cladding region.

The inner cladding region 104 has a substantially hexagonal cross-sectional shape. The first stress applying region 154 defines a first recess 122 and the second stress applying region 156 defines a second recess 124, as viewed in cross-section (as illustrated in Figure 1). The first stress applying region is located adjacent the inner cladding region with a first corner of the inner cladding region nested in the first recess. The second stress applying region is located adjacent the inner cladding region with a second corner of the inner cladding region, opposite the first corner, nested in the second recess.

In an alternative embodiment, there may be a gap between each stress applying region and the inner cladding region, which may reduce the birefringence of the PM PCF 100.

The first stress applying region and the second stress applying region are each formed of a plurality of stress elements 158. The stress elements are formed of a material having a second coefficient of thermal expansion different to the first coefficient of thermal expansion. The stress elements may, for example, be formed of Boron-doped Silica.

The stress elements 158 of each stress applying region extend in the longitudinal direction of the PM PCF 100. Within each stress applying region, the stress elements are arranged in a respective second lattice. The second lattice is a substantially hexagonal lattice (i.e. the lattice structure is formed of lattice cells that are substantially hexagonal in shape). The second lattice has a different pitch to the first lattice. In this embodiment, the pitch of the second lattice is one half of the first pitch i.e. the pitch between centres of neighbouring stress elements is one half of the pitch between the centres of neighbouring elements of the inner cladding region.

The locations of the first stress applying region and the second stress applying region relative to the core region and the microstructure elements, the first coefficient of thermal expansion, and the second coefficient of thermal expansion are configured to cause a stress induced birefringence in the core region 102 of the PM PCF 150.

In an embodiment, the first pitch is less than 9µm.

In an embodiment, the first pitch is in the range 3µm to 7µm.

In an embodiment, the PM PCF 100 has an outer diameter and the first pitch is less than 3% of the outer diameter.

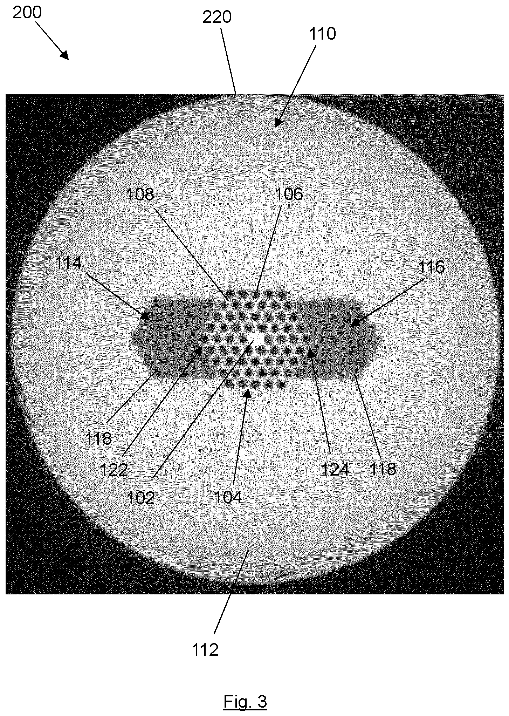

Referring to Figure 3, an embodiment provides a PM PCF 200 comprising a core region 102 for propagating light in a longitudinal direction of the PM PCF, an inner cladding region 104 surrounding the core region, and an outer cladding region 110 surrounding the inner cladding region, having the same structure as PM PCF 100 described above.

As can be seen in Figure 3, the outer diameter 220 of the PM PCF 200 is close to circular in cross-section.

The PM PCF 200 of this embodiment has an outer diameter of 125µm and the pitch between the microstructure elements and between the stress elements 118 (i.e. the first pitch) is 3.3µm (to within manufacturing tolerances). The core region 102 is a 5µm core.

In an alternative embodiment, the PM PCF 200 may have an outer diameter of 230µm, a first pitch of 6.5µm (to within manufacturing tolerances) and a 10µm core.

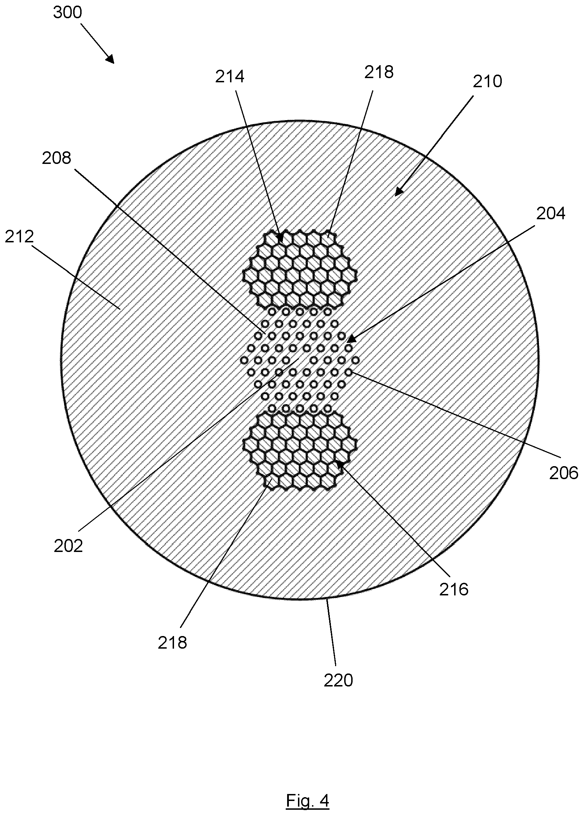

Referring to Figure 4, an embodiment provides a PM PCF 300 comprising a core region 202 for propagating light in a longitudinal direction of the PM PCF, an inner cladding region 204 surrounding the core region, and an outer cladding region 210 surrounding the inner cladding region.

The inner cladding region comprises a plurality of microstructure elements in the form of microstructural holes 206 provided in cladding background material 208. The microstructure elements extend in the longitudinal direction of the PM PCF and are arranged (as viewed in the cross-section of the PM PCF 300, as illustrated in Figure 3) in a first lattice. The first lattice is a substantially hexagonal lattice and has a first pitch between centres of neighbouring elements. The cladding background material has a first coefficient of thermal expansion, and may, for example, be Silica. The core region may also be Silica.

The outer cladding region comprises cladding background material 212, a first stress applying region 214 and a second stress applying region 216. The cladding background material has the first coefficient of thermal expansion, i.e. it is the same material as the cladding background material of the inner cladding region. The cladding background material 212 may, for example, be Silica.

The first stress applying region and the second stress applying region are located in the cladding background material, outside the inner cladding region. In this embodiment, the first stress applying region and the second stress applying region are located adjacent the inner cladding region. The stress applying regions do not overlap the inner cladding region.

The inner cladding region 204 has a substantially hexagonal cross-sectional shape. A first side of the first stress applying region 214 is located adjacent a first side of the inner cladding region 204. A first side of the second stress applying region 216 is located adjacent a second side of the inner cladding region, opposite the first side of the inner cladding region.

In an alternative embodiment, there may be a gap between each stress applying region and the inner cladding region, which may reduce the birefringence of the PM PCF 300.

The first stress applying region and the second stress applying region are each formed of a plurality of stress elements 218. The stress elements are formed of a material having a second coefficient of thermal expansion different to the first coefficient of thermal expansion. The stress elements may, for example, be formed of Boron-doped Silica.

The stress elements 218 of each stress applying region extend in the longitudinal direction of the PM PCF 300. Within each stress applying region, the stress elements are arranged in a respective second lattice. The second lattice is a substantially hexagonal lattice and has the same pitch as the first lattice.

The locations of the first stress applying region and the second stress applying region relative to the core region and the microstructure elements, the first coefficient of thermal expansion, and the second coefficient of thermal expansion are configured to cause a stress induced birefringence in the core region 202 of the PM PCF 300.

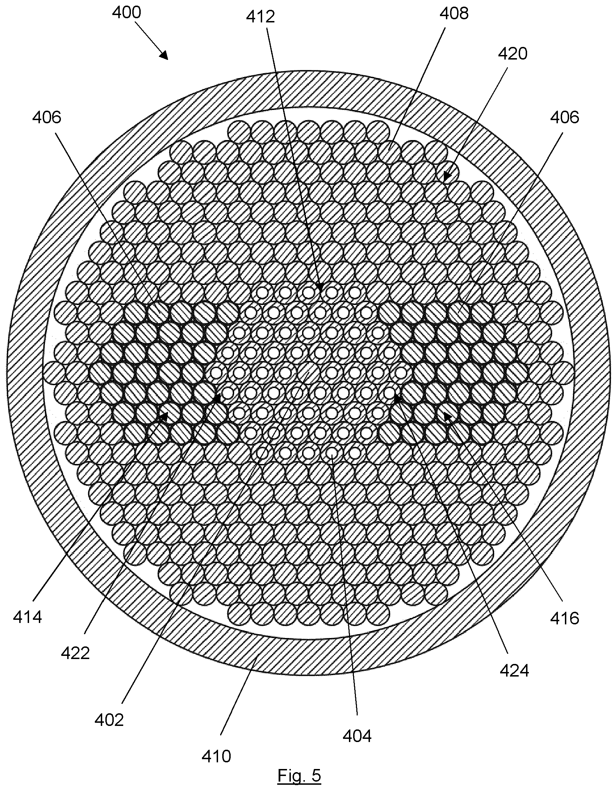

Referring to Figure 5, an embodiment provides a preform 400 for fabricating a PM PCF 100, 200 as described above with reference to Figure 1 or Figure 3.

The preform 400 comprises stacked longitudinal preform elements comprising a preform core rod 402, a plurality of preform inner cladding capillary tubes 404, a plurality of preform stress element rods 406, a plurality of preform outer cladding rods 408 and a preform stacking tube 410.

The preform inner cladding capillary tubes 404 are made of cladding background material and are stacked in an inner cladding region 412 around the preform core rod 402. The cladding background material has a first coefficient of thermal expansion, and may, for example, be Silica. The preform core rod 402 may also be made of Silica.

The preform inner cladding capillary tubes are stacked in a first lattice. The first lattice is a substantially hexagonal lattice and has a second pitch between centres of neighbouring capillary tubes.

The preform stress element rods 406 are made of a material having a second coefficient of thermal expansion, different to the first coefficient of thermal expansion. The preform stress element rods may, for example, be formed of Boron-doped Silica.

The preform stress element rods are arranged outside the inner cladding region 412 in a first stress applying region 414 and in a second stress applying region 416. Within each stress applying region 414, 416 the preform stress element rods are stacked in a second lattice having the second pitch between centres of neighbouring stress element rods, i.e. the second lattice has the same pitch between centres of neighbouring stress elements as is between neighbouring preform inner cladding capillary tubes 404.

The inner cladding region 412 has a substantially hexagonal cross-sectional shape. The first stress applying region 414 defines a first recess 422 and the second stress applying region defines a second recess 424, as viewed in cross-section (as illustrated in Figure 4). The first stress applying region is located adjacent the inner cladding region with a first corner of the inner cladding region nested in the first recess. The second stress applying region is located adjacent the inner cladding region with a second corner of the inner cladding region, opposite the first corner, nested in the second recess.

In an alternative embodiment, there may be a gap between each stress applying region 414, 416 and the inner cladding region 412, formed by providing a row of preform outer cladding rods 408 between each stress applying region 414, 416 and the inner cladding region 412.

The preform outer cladding rods 408 are formed of the cladding background material. The preform outer cladding rods are stacked in an outer cladding region 420, around the inner cladding region 412, the first stress region 414 and the second stress region 416.

The preform inner cladding capillary tubes 404, the preform stress element rods 406 and the preform outer cladding rods 408 are located within the preform stacking tube 410.

A PM PCF 100, 200 may be fabricated by drawing a fibre from the preform 400, using the method described by Bjarklev, Broeng and Bjarklev in "Photonic Crystal Fibres", Kluwer Academic Press, 2003 chapter 4, pp. 115-130. The PM PCF drawn from the preform 400 will have corresponding structural elements of corresponding relative size(s) and form(s) as the preform. The second pitch of the first and second lattices of the preform will be reduced to a smaller pitch, i.e. the first pitch of the first and second lattice of the PM PCF 100, 200, during fibre draw.

In the drawing process, the preform stress element rods 406 made of Boron-doped Silica will contract by a different amount to the preform core rod 402, the preform inner cladding capillary tubes 404, and the preform outer cladding rods 408 made of Silica when the fibre is cooled below the softening temperature/s of these materials. Thus a stress distribution will be present in the resulting PM PCF, and due to the elasto-optic effect the silica material will become birefringent. The stress field in the core region 10 determines the modal birefringence of the guided modes. Since the elasto-optic effect is substantially constant as a function of wavelength, the PM PCFs 100, 200 enable single-mode guidance with constant birefringence in a very broad spectral range.

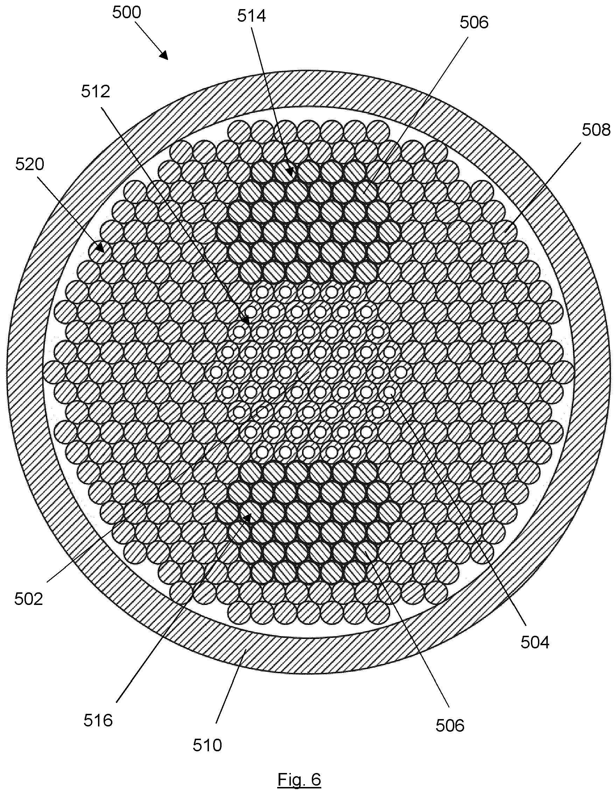

Referring to Figure 6, an embodiment provides a preform 500 for fabricating a PM PCF 300 as described above with reference to Figure 4.

The preform 500 comprises stacked longitudinal preform elements comprising a preform core rod 502, a plurality of preform inner cladding capillary tubes 504, a plurality of preform stress element rods 506, a plurality of preform outer cladding rods 508 and a preform stacking tube 510.

The preform inner cladding capillary tubes 504 are made of cladding background material and are stacked in an inner cladding region 512 around the preform core rod 502. The cladding background material has a first coefficient of thermal expansion, and may, for example, be Silica. The preform core rod 502 may also be made of Silica.

The preform inner cladding capillary tubes are stacked in a first lattice. The first lattice is a substantially hexagonal lattice and has a second pitch between centres of neighbouring capillary tubes.

The preform stress element rods 506 are made of a material having a second coefficient of thermal expansion, different to the first coefficient of thermal expansion. The preform stress element rods may, for example, be formed of Boron-doped Silica.

The preform stress element rods are arranged outside the inner cladding region 512 in a first stress applying region 514 and in a second stress applying region 516. Within each stress applying region 514, 516 the preform stress element rods are stacked in a second lattice having the second pitch between centres of neighbouring stress element rods, i.e. the second lattice has the same pitch between centres of neighbouring stress elements as is between neighbouring preform inner cladding capillary tubes 504.

The inner cladding region 512 has a substantially hexagonal cross-sectional shape. A first side of the first stress applying region 514 is located adjacent a first side of the inner cladding region 512. A first side of the second stress applying region 516 is located adjacent a second side of the inner cladding region, opposite the first side of the inner cladding region.

In an alternative embodiment, there may be a gap between each stress applying region 514, 516 and the inner cladding region 512, formed by providing a row of preform outer cladding rods 508 between each stress applying region 514, 516 and the inner cladding region 512.

The preform outer cladding rods 508 are formed of the cladding background material. The preform outer cladding rods are stacked in an outer cladding region 520, around the inner cladding region 512, the first stress region 514 and the second stress region 516.

The preform inner cladding capillary tubes 504, the preform stress element rods 506 and the preform outer cladding rods 508 are located within the preform stacking tube 510.

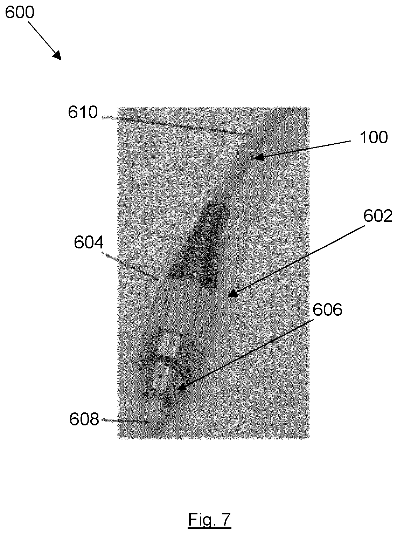

Figure 7 shows a part of a fibre assembly 600 according to an embodiment. The fibre assembly comprises an optical connector 602 and a PM PCF 100, as described above. The optical connector comprises a connector housing 604 and a connector sub-assembly 606 including a ferrule 608. It will be understood that any of the PM PCFs 100, 200, 300 described above may be used.

An end of the PM PCF 100 is cleaved to form an end facet, the microstructure elements within an end section of the PM PCF may then be collapsed and the end facet polished. This end of the PM PCF is located and glued within the ferrule 608. The end facet of the PM PCF is located in an output plane of the optical connector by aligning the end facet of the PM PCF with an output end of the ferrule.

The PM PCF is aligned inside the ferrule so that the core region of the PM PCF is centred inside a connector plane of the optical connector. The PM PCF may also be orientated so that its polarization axis lies in a predetermined plane.

As can be seen in Figure 7, the PM PCF 100 may be provided with a protective jacket 610, such as a polymer protective jacket.

The optical connector 602 may, for example, be an optical fibre connector of the type which in the prior art is commonly used to terminate the end of a standard optical fibre to enable easy connection and disconnection to a light source or to a sensor etc. Many different types of connectors have been introduced to the market, such as e.g. FC, E-2000, SMA connectors, as well as connectors with built in beam expansion.

## Claims

1. A polarization maintaining, PM, photonic crystal fibre, PCF, comprising:
a core region for propagating light in a longitudinal direction of the PM PCF;
an inner cladding region surrounding the core region, the inner cladding region comprising a plurality of microstructure elements extending in said longitudinal direction in a cladding background material having a first coefficient of thermal expansion, wherein the microstructure elements are arranged in a first lattice having a first pitch between centres of neighbouring elements; and
an outer cladding region surrounding the inner cladding region, the outer cladding region comprising said cladding background material having said first coefficient of thermal expansion, a first stress applying region and a second stress applying region, the first stress applying region and the second stress applying region are each formed of a plurality of stress elements of a material having a second coefficient of thermal expansion different to the first coefficient of thermal expansion, wherein the stress elements of each said stress applying region extend in said longitudinal direction and are arranged in a respective second lattice,
wherein the locations of the first stress applying region and the second stress applying region relative to the core region and the microstructure elements, the first coefficient of thermal expansion, and the second coefficient of thermal expansion are configured to cause a stress induced birefringence in the core region of the PM PCF.

2. The PM PCF of claim 1, wherein the first stress applying region and the second stress applying region are located in the cladding background material outside and adjacent the inner cladding region.

3. The PM PCF of claim 1 or claim 2, wherein the first lattice and the second lattice have the same lattice structure.

4. The PM PCF of claim 1, 2 or 3, wherein the first lattice and the second lattice are hexagonal lattices.

5. The PM PCF of any one of claims 1 to 4, wherein the stress elements of each said stress applying region are arranged in a respective second lattice with said first pitch between centres of neighbouring stress elements.

6. The PM PCF of any one of claims 1 to 5, wherein the microstructure elements in the inner cladding region forms a hexagonal arrangement such that the inner cladding region has a substantially hexagonal cross-sectional shape.

7. The PM PCF of any one of claims 1 to 6, wherein a first side of the first stress applying region is located adjacent a first side of the inner cladding region and a first side of the second stress applying region is located adjacent a second side of the inner cladding region, opposite the first side of the inner cladding region.

8. The PM PCF of any one of claims 1 to 7, wherein the first stress applying region and the second stress applying region respectively define a first recess and a second recess in cross-section, and wherein the first stress applying region is located adjacent the inner cladding region with a first corner of the inner cladding region nested in the first recess and the second stress applying region is located adjacent the inner cladding region with a second corner of the inner cladding region, opposite the first corner, nested in the second recess.

9. The PM PCF of any one of claims 1 to 8, wherein the first pitch is less than 9µm.

10. The PM PCF of claim 9, wherein the first pitch is in the range 3µm to 7µm.

11. The PM PCF of claim 10, wherein the PM PCF has an outer diameter and the first pitch is less than 3% of the outer diameter.

12. The PM PCF of claim 11, wherein the outer diameter is 125µm and the first pitch is less than 4µm, such as equal to 3.3µm, to within manufacturing tolerances.

13. The PM PCF of claim 11, wherein the outer diameter is 230µm and the first pitch is less than 7µm, such as equal to 6.5µm, to within manufacturing tolerances.

14. The PM PCF of any one of claims 6 to 14, wherein the hexagonal arrangement in the inner cladding region comprises 4 layers of microstructure elements surrounding the core region, such as 5 layers of microstructure elements surrounding the core region.

15. The PM PCF of any one of claims 6 to 14, wherein along an axis extending between the stress applying regions at least 4 layers of microstructure elements is arranged between the core region and the outer cladding region.
